# EUROPÄISCHE PATENTSCHRIFT

(11) **EP 0 532 645 B1**
(45) Veröffentlichungstag und Bekanntmachung des Hinweises auf die Patenterteilung: **26.10.1994**
(21) Anmeldenummer: 91911447.0
(22) Anmeldetag: 04.06.1991
(51) Int. Cl.: G03G 15/20

(54) **ENDLOS-BAHNEN/ETIKETTEN-LASER-DRUCKER**
LASER PRINTER FOR CONTINUOUS WEBS/LABELS
IMPRIMANTE LASER D'ETIQUETTES/BANDES EN CONTINU

(30) Priorität: 05.06.1990 DE 4018025
(43) Veröffentlichungstag der Anmeldung: 24.03.1993
(73) Patentinhaber: CSAT GESELLSCHAFT FÜR COMPUTER-SYSTEME UND AUTOMATIONS-TECHNIK MBH, 76185 Karlsruhe (DE)
(72) Erfinder: MATHEA, Hans, D-7500 Karlsruhe 21 (DE)
(74) Vertreter: Trappenberg, Hans
(86) Internationale Anmeldenummer: EP9101027
(87) Internationale Veröffentlichungsnummer: WO9119231

(56) Entgegenhaltungen:
- DE-A- 2 008 892
- DE-A- 2 933 691
- US-A- 4 137 340
- US-A- 4 202 618
- US-A- 4 347 525

## Beschreibung

Die Erfindung betrifft einen Endlos-Bahnen/Etiketten-Laser-Drucker zum Bedrucken von auf einer Endlos-Etikettenbahn angebrachten Etiketten, wobei die Etikettenbahn aus einer Trägerbahn besteht, auf der quer zur Längsrichtung der Bahn, mit Haftkleber beschichtete Etikettenabschnitte aus Papier, Karton, Metallfolie oder Kunststoff abnehmbar angeheftet sind, und die unbedruckte Etikettenbahn zu einer Rolle aufgewickelt an einer Stirnseite eines den Endlos-Bahn/Etiketten-Laser-Drucker aufnehmenden Gehäuses angeordnet ist, und die Etikettenbahn jenseits nach dem Bedrucken mittels einer Aufwickeleinrichtung wieder aufgewickelt wird, und wobei der Laserdrucker eine Fixierstation aufweist, die den über eine Bildwalze auf die Etiketten aufgetragenen Toner fixiert. Die sich so ergebenden Bahnen beziehungsweise mit bedruckten Etiketten versehenen Etikettenbahnrollen werden sodann weiteren Einrichtungen beziehungsweise Vorrichtungen zugeleitet, von denen die Etiketten dann auf die zu etikettierende Ware aufgeklebt werden.

Bei derartigen Bahn/Etikettendruckern sind die verschiedensten Druckwerke im Einsatz. Insbesondere dann, wenn sehr exakte Beschriftung beziehungsweise sehr deutliche grafische Gestaltung gefordert wird, werden zweckmäßigerweise Laserdrucker eingesetzt, also Druckwerke, die über einen mittels einer Elektronik gesteuerten Laserstrahl eine Bildwalze beschreiben, die sodann den auf ihr haftenden Toner auf die Schriftfläche abgibt, der anschlieβend in einer Fixierstation durch Wärmeeinwirkung verfestigt wird. Derartige Laserdrucker ergeben nicht nur sehr ansprechende Schriften beziehungsweise Grafiken, wobei auch noch kleinste Details deutlich erkennbar sind, sondern sie lassen sich auch sehr einfach über eine Steuerelektronik programmieren. Mit Laserdrucker ausgestattete Endlos-Bahn/Etiketten-Laser-Drukker finden daher, trotz ihres verhältnismäßig hohen Preises, immer mehr Anwendung. Schwierigkeiten bereiten die Laserdrucker in derartigen Einrichtungen allerdings durch die notwendige präzise Führung sämtlicher Bauteile wie auch des zu beschriftenden Bandes als auch hinsichtlich der Wahl und der Unterbringung der Fixierstation. Dies führt zu verhältnismäßig schweren, großvolumigen und wenig wartungsfreundlichen Geräten. Damit ergibt sich eine erste Aufgabe, die durch den erfindungsgemäßen Drucker zu lösen ist, nämlich ihn so zu gestalten, daß er volumenmäßig klein, kompakt, leicht und vor allen Dingen einfach zu bedienen und zu warten ist.

Die größte Schwierigkeit liegt in der zweckmäßigen Ausbildung der Fixierstation. Diese Fixierstation, durch die der trockene, pulverförmige Toner mittels Wärmeeinwirkung aufgeschmolzen wird, ist üblicherweise eine auf etwa 200 °C aufgewärmte Walze, die auf das beschriftete Papier aufgedrückt wird. Durch das Aufdrücken der Fixierwalze werden feine Schrift- und grafische Konturen breitgedrückt, so daß sie ihre Brillanz verlieren beziehungsweise kleine Schriften nicht mehr lesbar sind. Der besondere Nachteil derartiger Fixierwalzen bei Endlos-Bahnen/Etiketten-Laser-Druckern besteht jedoch darin, daß die Haftkleberschicht und das Bedruckmaterial strapaziert wird, möglicherweise also die Haftung der Etiketten an den zu etikettierenden Materialien ungenügend wird. Außerdem kann an den Rändern der Etiketten Haftkleber austreten und die heiße Fixierwalze wie auch weitere Führungsrollen unzulässig verschmutzen. Damit stellt sich zusätzlich die Aufgabe, eine Fixierstation für einen derartigen Endlos-Bahnen/Etiketten-Laser-Drucker anzugeben, die diese Nachteile nicht aufweist, die Strichschärfe auf den Etiketten also nicht beeinflußt und insbesondere auch den Haftkleber und das Bedruckmaterial nicht strapaziert.

Der Vorteil der warmen Fixierwalze bei bekannten Laserdruckern ist der, daß die bei üblichem Material auf etwa 200 °C aufgeheizte Fixierwalze ein schnelles Aufschmelzen des Toners und dessen Fixieren auf der Unterlage zuläßt. Ein derart schneller Durchlauf ist bei anderen Fixierverfahren, beispielsweise durch eine Blitzlampe, nach den bisher bekannt gewordenen Verfahren, wie zum Beispiel nach der US-PS 3,871,761 nicht möglich, da entweder das Ladegerät die Blitzlampe nicht schnell genug mit Energie versorgen kann oder auch die Blitzlampe überhitzt wird. Denkbar wäre die Blitzlampe mit einer verhältnismäßig hohen Spannung, die bei etwa 10.000 V liegt, zu versorgen, jedoch gibt sie dann einen sehr hohen Anteil von UV-Licht ab, sodaß toxisches Ozon erzeugt wird.

Die zu beschriftende Etikettenbahn ist meistens zu einer breiten Rolle aufgewickelt. Diese breite Etikettenbahn wird beim Durchlaufen des Endlos-Bahnen/Etiketten-Laser-Druckers allgemein mit mehreren, nebeneinander liegenden Reihen von Etikettierbeschriftungen (Nutzen) versehen, was bedingt, daß die beschriftete Etikettenbahn nachträglich nochmals einer Schneidstation zugeführt werden muß, die die breite Etikettenbahn in der der Breite der einzelnen bedruckten Reihen entsprechenden Breite zerschneidet. Selbstverständlich ist es auch möglich, schmale Etikettenbahnen, die nur eine Etikettierreihe aufweisen, zu verwenden, wobei die bei der Mehrfachnutzung notwendige Zertrenneinrichtung nicht benötigt wird. Hierbei wird jedoch der verhältnismäßig teure Endlos-Bahnen/Etiketten-Laser-Drucker nur ungenügend ausgenutzt und zum Bedrukken der Etiketten sehr viel Zeit benötigt. Damit stellt sich für die Erfindung die weitere Aufgabe, den Endlos-Bahnen/Etiketten-Laser-Drukker durch Mehrfachnutzung intensiv zu nutzen, jedoch ohne eine zusätzliche Zertrenneinheit einsetzen zu müssen.

Die gestellten Aufgaben, also
1. leichter Transport, leichte Bedienung und Wartung des Endlos-Bahnen/Etiketten-Laser-Druckers,
2. zweckmäßige Ausgestaltung der Fixierstation, die auch ein schnelles und wirtschaftliches Bedrucken eines sehr breiten Materialspektrums von dünnstem Papier über hitzeempfindliche, kratz-laugen-säure-UV-Licht-feste Kunststoffe bis Metallfolien ermöglicht,
3. Mehrfachnutzung einer breiten Etikettenbahn, ohne daß das Zertrennen in einem zweiten Arbeitsgang durchgeführt werden muß,
4. einen kompakten, transportablen Endlos-Bahnen/ Etiketten-Laser-Drucker anzugeben, der gegebenenfalls auch als Tischgerät verwendet werden kann,

werden in erfindungsgemäßer Weise dadurch gelöst, daß die Toner-Fixierstation eine Impulse mit einer Impulsfrequenz zwischen 1....5 Hz im Licht/Infrarot-Bereich zwischen 700 nm und 1100 nm mit einer elektrischen Arbeit bis etwa 1500 Ws/Impuls, entsprechend einer einstellbaren Energiedichte zwischen 3 Ws/cm² und 20 Ws/cm² abstrahlende, das Etikettenband nicht berührende Blitzlampe ist, die über ein Hochfrequenz-Ladegerät (L) gespeist wird, dessen Blitzkondensator eine Blitzspannung von etwa 650 V erreicht, daß über der Blitzlampe ein etwa parabolisch geformter Reflektor mit einer in Bahnlängsrichtung gemessenen Strahlöffnung von etwa 30 mm angeordnet ist, daß eine Kühlvorrichtung vorgesehen ist, die mit etwa 20 l/s Kühlluft die Blitzlampe kühlt und eine Absaugvorrichtung zum Absaugen der Tonerdämpfe vorgesehen ist, die über Filter ausbläst, daß zwischen der Fixierstation (Blitzlampe) und der Aufwickeleinrichtung eine Längs-Schneidvorrichtung angeordnet ist und daß die Aufwickeleinrichtung aus einer Mehrzahl gemeinsam angetriebener, voneinander durch Teller getrennter Rollen gebildet ist.

Nicht mehr also wie bei den bekannten Endlos-Bahnen/Etiketten-Laser-Druckern wird eine erhitzte Fixierwalze, die den auf dem Schriftgut befindlichen Toner erwärmt und auf die Schriftgutfläche aufpreßt, benutzt, sondern eine Blitzlampe, die im Grenzbereich zwischen Licht und Infrarot, also etwa zwischen 700 nm und 1100 nm strahlt und somit den auf dem Schriftgut befindlichen Toner aufschmilzt und damit fixiert. Die Impulsfolge ist hierbei so gewählt, daß sich die durch die Blitzlampe bestrahlten Bereiche überlappen, so daß mit Sicherheit das gesamte Schriftgut beziehungsweise der gesamte Toner über den vollen Bereich der auf der Etikettenbahn angebrachten Etiketten fixiert wird. Selbstverständlich können auch mehrere dieser Blitzlampen Verwendung finden, falls die Strahlungsenergie einer einzigen derartigen Blitzlampe oder auch deren geometrische Abmessungen für das jeweilige Schriftgut nicht ausreichend sein sollten. Der Einsatz derartiger Blitzlampen zum Fixieren von Toner ist zwar an sich bekannt, jedoch wurde bisher von deren Verwendung abgesehen, weil die volumenmäßige und realisierungstechnische Unterbringung der kompletten Fixiereinheit mit einem für eine derartige Fixiereinheit notwendigen Absaugung mit Luftfilter bisher kein kompaktes Gerät ermöglicht hat. Da jedoch gerade in diesem Falle, beim Bedrucken von mit Haftklebern beschichteten Etiketten die Vorzüge einer solchen, zudem eine hohe Standzeit aufweisenden, Blitzlampe evident sind, wurde durch die Erfindung ein Weg aufgezeigt, wie die Vorzüge dieser Blitzlampe - insbesondere keine Berührung des Schriftgutes und minimale thermische Belastung des Bedruckmaterials und der Kleberschicht - zur Geltung gebracht werden können, ohne deren Nachteile in Kauf nehmen zu müssen. Zu beachten ist, daß die derzeit bekannten Fixierstationen solcher Laserdrucker, die mit Blitzlampen arbeiten, wie beispielsweise in der DE-A-2638658 angegeben, mit so geringer Leistung arbeiten, daß, um den Toner in einwandfreier Art und Weise zu schmelzen und zu fixieren, das Etikettenband sehr langsam laufen muß, das Gerät also nicht wirtschaftlich arbeiten kann. Die bisher eingesetzte Energiedichte bei derartigen Blitzlampen liegt zwischen 0,8 bis maximal 3 Ws/cm², die zudem noch den Einsatz eines speziellen teueren Toners bedingt.

Auch ist zu beachten, daß bei einer derart geringen Energiedichte je nach Material der Trägerbahn diese Bahn nicht ausreichend miterwärmt wird, so daß sich bei diesen bekannten Geräten eine auf der kalten Oberfläche der Trägerbahn aufliegende geschmolzene Toner-Kruste bildet, die sehr leicht zu entfernen ist. Gerade jedoch bei Etiketten wird selbstverständlich Wert auf eine dauerhafte Fixierung der aufgebrachten Merkmale gelegt. Andererseits jedoch sollen diese kleinen kompakten Geräte an einer üblichen Büro-Netzsteckdose betrieben werden können. Die aus einer derartigen Netzsteckdose entnehmbare Leistung ist also limitiert, so daß die hohe Leistung eines Blitzes, direkt aus der Steckdose entnommen, zum Durchbrennen der vorgeschalteten Sicherung führen würde. Die Lösung dieses Problems wird nach der Erfindung erreicht durch das angegebene Hochfrequenz-Ladegerät, das eine praktisch gleichbleibende Leistung pro Zeiteinheit dem Netz entnimmt, also die gefürchteten zum Abschalten führenden Ladestromstöße vermeidet. Weiter ist auch zu bemerken, daß dadurch, daß die Blitzspannung bei etwa 650 V liegt, kaum UV-Strahlung und damit auch kaum störendes Ozon entsteht. Die bei der hohen Energiedichte bis 20 Ws/cm² entstehende Wärme wird durch die hohe Saugleistung der Absaugung von etwa 20 l/s abgeführt, gleichzeitig mit den sich im Bereich der Blitzlampe entwickelnden Tonerdämpfen und dem eventuell entstehenden Ozon. Neben dem Schutz der Blitzlampe vor Verunreinigung mit sich niederschlagenden Tonerdämpfen hat dies zudem den Vorteil, daß diese Dämpfe in den Filtern zurückgehalten werden, also das Bedienungspersonal nicht beeinträchtigen. Zweckmäßigerweise werden als Filter ein Staubfilter als Vorfilter und ein nachgeschalteter Aktivkohlefilter eingesetzt. Die Bildung von Ozon kann auch dadurch vermindert oder ausgeschlossen werden, daß in erfindungsgemäßer Weise das Glas der Blitzlampe als UV-Filter ausgebildet ist.

Bei dieser hohen Blitzlampen-Leistung wird selbstverständlich auch der zur Blitzlampe gehörende Kondensator sehr stark erwärmt. Nach der Erfindung wird einer unzulässigen Erwärmung dadurch vorgebeugt, daß der Blitzkondensator in eine Mehrzahl parallel geschalteter Einzelkondensatoren unterteilt ist, die ihre Wärme selbstverständlich besser an die Umgebung beziehungsweise die Kühlluft abgeben.

Die erfindungsgemäße Verwendung einer Blitzlampe in Kombination mit der erfindungsgemäßen Kühlung und Luftabsaugung erbringt zudem noch den Vorteil, daß nunmehr die gesamten Bausteine des Laserdruckers zusammen mit dieser Blitzlampe in dem oberen Teil eines Gehäuses angeordnet werden können, auf dessen Basisgehäuse die Etikettenbahn geführt wird. Zum Einfügen der Etikettenbahn in den Endlos-Bahnen/Etiketten-Laser-Drucker nach der Erfindung muß also lediglich der obere Gehäuseteil nach hinten oder seitlich weggeklappt, die Etikettenbahn eingelegt und sodann der obere Gehäuseteil wieder auf das Basisgehäuse zu verschwenkt und verriegelt werden. In dem Basisgehäuse ist dann noch die restliche Elektronik/Elektrik sowie die Absaugung mit Filter untergebracht und sind beidseits die Rollenführungen der Etikettenbahn angebracht. Wird einem weiteren Erfindungsmerkmal nach dieser obere Gehäuseteil mittels Klappscharnieren mit einer zur Etikettenbahn-Längsrichtung parallel verlaufenden Achse verschwenkbar am Basisgehäuse angeordnet, ist, wie oben schon erwähnt, nicht nur das Einfügen der Etikettenbahn sehr vereinfacht, sondern die gesamten zu bedienenden und zu wartenden Geräteteile ohne weiteres, und ohne Behinderung durch irgendwelche Geräteteile zugänglich. Insbesondere steht beim Einlegen der Etikettenbahn nicht eine erhitzte Wärme-Fixierwalze im Wege.

Hinsichtlich des Mehrfachnutzens, den der Endlos-Bahnen/ Etiketten-Laser-Drucker nach der Erfindung bringen soll, ist vorgesehen, vor der Aufwickelstation eine Längs-Schneidvorrichtung vorzusehen. Diese Längs-Schneidvorrichtung soll aus Rollenmessern gebildet sein, die auf einer über eine Magnetkupplung mit dem Antriebsmotor verbundene Antriebsachse verschieb- und feststellbar angeordnet sind. Zwar sind derartige Längs-Schneidvorrichtungen bekannt, jedoch konnten diese beiden Geräte - Endlos-Bahnen/Etiketten-Laser-Drucker und Schneidvorrichtung - nie so zusammen in einem Gerät vereinigt werden, daß die Forderung nach einem kompakten, bedien- und wartungsfreundlichen Gerät zu erfüllen war. Durch die erfindungsgemäße Anordnung der einzelnen Bauteile dieses Endlos-Bahnen/Etiketten-Laser-Druckers ist es jedoch möglich, die Schneidvorrichtung zwischen der Fixierstation und der Aufwickeleinrichtung anzuordnen, so daß sich insgesamt ein sehr kompaktes, aber trotzdem noch zugängliches Gerät ergibt.

Auf der Zeichnung ist ein Ausführungsbeispiel des Erfindungsgegenstandes schematisch dargestellt, und zwar zeigen
- Fig. 1: in Ansicht und
- Fig. 2: in Draufsicht die Anordnung der einzelnen Bauelemente,
- Fig. 3: eine Seitenansicht des Endlos-Bahnen/Etiketten-Laser-Drucker-Gehäuses und
- Fig. 4: ein Steuerungsschema.

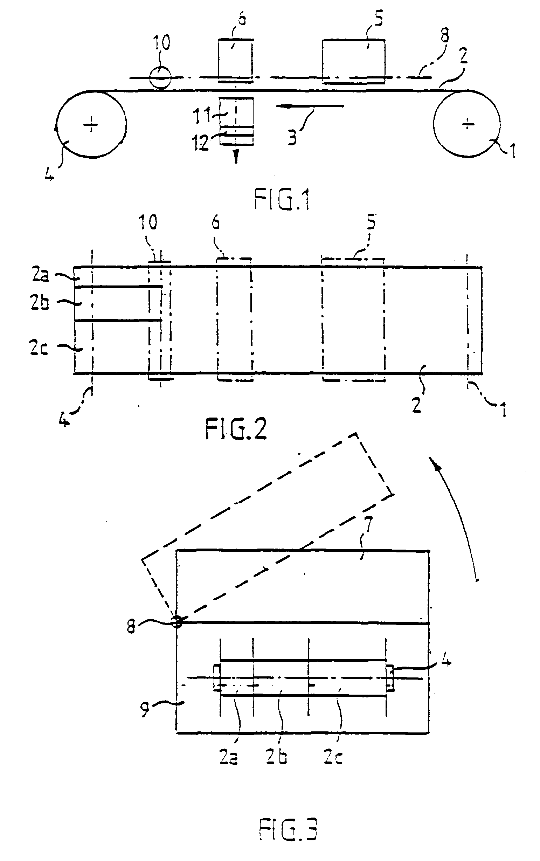

Von einer Rolle (1) wird eine breite Etiketten-bahn (2) in Richtung des Pfeiles (3) abgezogen und jenseits auf einer Aufwickeleinrichtung (4) wieder aufgewickelt. Oberhalb der Etikettenbahn (2) ist eine Laser-Steuerelektronik (5) sowie eine Blitzlampe (6) angeordnet. Diese beiden Bausteine - Laser-Steuerelektronik mit zugehöriger Bildwalze und die Blitzlampe - sind in einem oberen Gehäuseteil (7) untergebracht, der über eine parallel zur Längsrichtung der Etikettenbahn (2) liegende Achse (8) (in Fig. 1 strichpunktiert eingezeichnet) auf ein Basisgehäuse (9) aufgeklappt werden kann. Zwischen der Blitzlampe (6) und der Aufwickeleinrichtung (4) sind mehrere Rollenmesser (10) angeordnet, die die breite Etikettenbahn (2) in schmale Bänder (2a, 2b, 2c) gewünschter Breite zertrennen, worauf diese Bänder dann in entsprechend bemessenen Rollen aufgewickelt werden. Mit 11 ist eine Kühlvorrichtung bezeichnet.

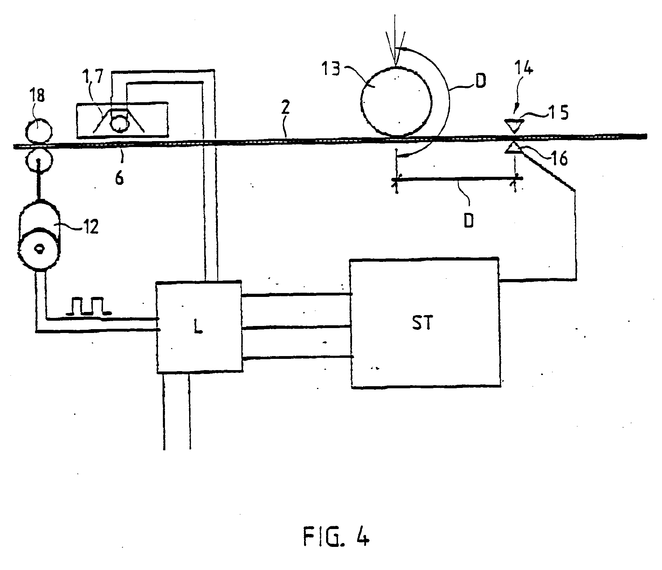

Fig. 4 zeigt ähnlich wie Fig. 1 noch einige Details des Gerätes. Zu erkennen ist die Etikettenbahn (2), die mittels eines Friktionstriebes (18) über einen Antriebsmotor mit Impulsgeber (12) durch das Gerät hindurchgezogen wird. Oberhalb der Etikettenbahn (2) ist eine Bildwalze (13) angeordnet, die von einem Laser an ihrer Oberseite beaufschlagt wird und das damit erzeugte Bild an der Unterseite auf die Etikettenbahn (2) abgibt. Die Strecke D über den Umfang dieser Bildwalze (13) von der Laser-Einstrahlung bis zur Übertragung auf die Etikettenbahn (2), entspricht dem Abstand D, in dem vor der Bildwalze (13) eine Lichtschranke (14), bestehend aus einem Sender (15) und Empfänger (16), angeordnet ist. Sender (15) und Empfänger (16) dieser Lichtschranke sind auf Klapparmen angebracht, damit der Sender (15) zum Einlegen der Etikettenbahn (2) aufgeklappt und anschließend wieder in seine Arbeitslage gebracht werden kann. Ebenfalls oberhalb der Etikettenbahn (2) befindet sich die Blitzlampe (6) mit Reflektor (17). Die Bildwalze (13) wie auch die Blitzlampe (6) mit ihrem Reflektor sind im oberen Gehäuseteil (7) angeordnet. Im unteren Gehäuseteil (9) befindet sich der Antriebsmotor (12), sowie die weitere Elektronik und Elektrik, also das Ladegerät L, sowie das Steuergerät ST.

Insgesamt ergibt sich damit eine kompakte Einheit, der einerseits eine breite Etikettenbahn zur Mehrfachnutzung zugeführt werden und jenseits nach äußerst exakter und frei wählbarer Beschriftung wieder in Rollen gewünschter Breite entnommen werden kann, wobei durch die Aufklappmöglichkeit ein einfaches Bedienen und eine leichte Wartung möglich ist.

## Patentansprüche

1. Endlos-Bahnen/Etiketten-Laser-Drucker zum Bedrucken von auf einer Endlos-Etikettenbahn (2) angebrachten Etiketten, wobei die Etikettenbahn (2) aus einer Trägerbahn besteht, auf der quer zur Längsrichtung der Bahn, mit Haftkleber beschichtete Etikettenabschnitte aus Papier, Karton, Metallfolie oder Kunststoff abnehmbar angeheftet sind, und die unbedruckte Etikettenbahn (2) zu einer Rolle aufgewickelt an einer Stirnseite eines den Endlos-Bahn/Etiketten-Laser-Drucker aufnehmenden Gehäuses angeordnet ist, und die Etikettenbahn (2) jenseits nach dem Bedrucken mittels einer Aufwickeleinrichtung (4) wieder aufgewickelt wird, und wobei der Laserdrucker eine Fixierstation (Blitzlampe 6) aufweist, die den über eine Bildwalze (13) auf die Etiketten aufgetragenen Toner fixiert,
dadurch gekennzeichnet,
daß die Toner-Fixierstation eine Impulse mit einer Impulsfrequenz zwischen 1....5 Hz im Licht/Infrarot-Bereich zwischen 700 nm und 1100 nm mit einer elektrischen Arbeit bis etwa 1500 Ws/Impuls, entsprechend einer einstellbaren Energiedichte zwischen 3 Ws/cm² und 20 Ws/cm² abstrahlende, das Etikettenband (2) nicht berührende Blitzlampe (6) ist, die über ein Hochfrequenz-Ladegerät (L) gespeist wird, dessen Blitzkondensator eine Blitzspannung von etwa 650 V erreicht, daß über der Blitzlampe (6) ein etwa parabolisch geformter Reflektor (17) mit einer in Bahnlängsrichtung gemessenen Strahlöffnung von etwa 30 mm angeordnet ist, daß eine Kühlvorrichtung (11) vorgesehen ist, die mit etwa 20 l/s Kühlluft die Blitzlampe (6) kühlt und eine Absaugvorrichtung zum Absaugen der Tonerdämpfe vorgesehen ist, die über Filter (12) ausbläst, daß zwischen der Fixierstation (Blitzlampe 6) und der Aufwickeleinrichtung (4) eine Längs-Schneidvorrichtung (10) angeordnet ist und daß die Aufwickeleinrichtung (4) aus einer Mehrzahl gemeinsam angetriebener, voneinander durch Teller getrennter Rollen gebildet ist.

2. Endlos-Bahnen/Etiketten-Laser-Drucker
nach Anspruch 1,
dadurch gekennzeichnet,
daß das Glas der Blitzlampe als UV-Filter ausgebildet ist.

3. Endlos-Bahnen/Etiketten-Laser-Drucker
nach Anspruch 1,
dadurch gekennzeichnet,
daß der Blitzkondensator in eine Mehrzahl parallel geschalteter Einzelkondensatoren unterteilt ist.

4. Endlos-Bahnen/Etiketten-Laser-Drucker
nach Anspruch 1,
dadurch gekennzeichnet,
daß eine Lichtschranke (14) zum Erfassen der in Laufrichtung vorderen Etikettenkante oder der Lochkanten bei mit Randlochung versehenen Trägerbahnen vorgesehen ist.

5. Endlos-Bahnen/Etiketten-Laser-Drucker
nach Anspruch 4,
dadurch gekennzeichnet,
daß die Lichtschranke (14) eine Gabel-Lichtschranke ist, die zwischen Sender (15) und Empfänger (16) geteilt und jedes Teil an den Armen einer die Etikettenbahn (2) zwischen sich aufnehmenden Klappe angeordnet ist.

6. Endlos-Bahnen/Etiketten-Laser-Drucker
nach Anspruch 4 oder 5,
dadurch gekennzeichnet,
daß der Abstand der Lichtschranke (14) von der Berührungslinie der Bildwalze (13) mit der Etikettenbahn (2) gleich dem Abstand über den Umfang (D) der Bildwalze (13) von dieser Berührungslinie zum Laser-Strahleintritt auf die Bildwalze (13) ist.

7. Endlos-Bahnen/Etiketten-Laser-Drucker
nach Anspruch 1
dadurch gekennzeichnet,
daß ein gemeinsamer Antriebsmotor für die Bildwalze (13) und für die in einem Transportmodul zusammengefaßte Antriebswalze mit Andruckwalze (Friktionstrieb 18) und die Längs-Schneidvorrichtung (10) vorgesehen ist.

8. Endlos-Bahnen/Etiketten-Laser-Drucker
nach Anspruch 1 oder 7,
dadurch gekennzeichnet,
daß die Längs-Schneidvorrichtung (10) aus Rollenmessern gebildet ist, die auf einer Antriebsachse verschieb- und feststellbar angeordnet sind.

9. Endlos-Bahnen/Etiketten-Laser-Drucker
nach Anspruch 1
dadurch gekennzeichnet,
daß die Einzelbausteine des Gerätes im Ober-(7) beziehungsweise Unterteil (9) eines Gehäuses untergebracht sind, wobei das Oberteil (7) mittels Klappscharnieren (8) mit einer zur Etikettenbahn-Längsrichtung parallel oder senkrecht verlaufenden, in der Ebene der Bahnführung liegenden Achse aufklappbar ist.

10. Endlos-Bahnen/Etiketten-Laser-Drucker
nach Anspruch 1,
dadurch gekennzeichnet,
daß die Achse der Aufwickeleinrichtung (4) über eine einen steten limitierten Zug vermittelnde Magnetkupplung mit dem Antriebsmotor verbunden ist.

11. Endlos-Bahnen/Etiketten-Laser-Drucker
nach Anspruch 1,
dadurch gekennzeichnet,
daß das Hochfrequenz-Ladegerät (L) eine der jeweiligen Einstellung entsprechende, jeweils gleichbleibende Leistungsaufnahme aufweist.

## Claims

1. An endless strip/label laser printer for printing on labels disposed on an endless label strip (2), wherein the label strip (2) comprises a carrier strip on which label portions of paper, cardboard, metal foil or plastics, which are coated with adhesive, are removably stuck transversely relative to the longitudinal direction of the strip, and the unprinted label strip (2) when rolled up to form a roll is arranged at one end of a housing accommodating the endless strip/label laser printer and the label strip (2) is rolled up again on the other side after the printing operation by means of a rolling device (4), and wherein the laser printer has a fixing station (flash lamp 6) which fixes the toner applied to the labels by way of an image drum (13) characterised in that the toner fixing station is a flash lamp (6) which does not touch the label strip (2) and which emits pulses at a pulse rate of between 1 ...5 Hz in the light/infra-red range between 700 nm and 1100 nm with an electrical work of up to about 1500 Ws/pulses corresponding to an adjustable energy density of between 3 Ws/cm² and 20 Ws/cm², the flash lamp being fed by way of a high-frequency charging device (L) whose flash capacitor reaches a flash voltage of about 650 V, that a reflector (17) of approximately parabolic shape with a beam opening as measured in the longitudinal direction of the strip of about 30 mm is arranged over the flash lamp (6), that there is provided a cooling device (11) which cools the flash lamp (6) with about 20 l/s of cooling air and there is provided a suction removal device for sucking away the toner vapours, which blows out by way of filters (12), that a longitudinal cutting device (20) is arranged between the fixing station (flash lamp 6) and the rolling device (4) and that the rolling device (4) is formed from a plurality of jointly driven rollers which are separated from each other by plates.

2. An endless strip/label laser printer according to claim 1 characterised in that the glass of the flash lamp is in the form of an UV-filter.

3. An endless strip/label laser printer according to claim 1 characterised in that the flash capacitor is subdivided into a plurality of individual capacitors which are connected in parallel.

4. An endless strip/label laser printer according to claim 1 characterised in that there is provided a light barrier means (14) for detecting the edge of the label which leads in the direction of travel or the perforation edges in the case of carrier strips which are provided with edge perforations.

5. An endless strip/label laser printer according to claim 4 characterised in that the light barrier means (14) is a fork-type light barrier means which is divided between transmitter (15) and receiver (16) and each part is arranged at the arms of a flap which accommodates the label strip (2) between same.

6. An endless strip/label laser printer according to claim 4 or claim 5 characterised in that the distance of the light barrier means (14) from the line of contact of the image drum (13) with the label strip (2) is equal to the distance over the periphery (D) of the image drum (13) from said contact line relative to the laser beam entry on to the image drum (13).

7. An endless strip/label laser printer according to claim 1 characterised in that there is provided a common drive motor for the image drum (13) and for the drive roller, which is combined in a transport module, with a contact pressure roller (friction drive 18) and the longitudinal cutting device (10).

8. An endless strip/label laser printer according to claim 1 or claim 7 characterised in that the longitudinal cutting device (10) is formed from roller blades which are arranged displaceably and fixably on a drive shaft.

9. An endless strip/label laser printer according to claim 1 characterised in that the individual components of the device are disposed in the upper (7) and lower (9) portion respectively of a housing, wherein the upper portion (7) can be pivoted open by means of flap hinges (8) with an axis which extends parallel or perpendicularly to the longitudinal direction of the label strip and which is disposed in the plane in which the strip is guided.

10. An endless strip/label laser printer according to claim 1 characterised in that the spindle of the rolling device (4) is connected to the drive motor by way of a magnetic coupling means which provides a steady limited pull.

11. An endless strip/label laser printer according to claim 1 characterised in that the high-frequency charging device (L) has a power consumption which corresponds to the respective setting and respectively remains the same.

## Revendications

1. Imprimante à laser pour étiquettes sur bandes continues pour imprimer des étiquettes qui sont appliquées sur une bande porte-étiquettes continue (2), cependant que la bande porte-étiquettes (2) est constituée par une bande porteuse sur laquelle adhèrent, transversalement par rapport à la direction longitudinale de la bande, des étiquettes individuelles en papier, en carton, en feuille métallique ou en matière plastique qui sont revêtues d'un adhésif et qui peuvent être enlevées, que la bande porte-étiquettes non imprimée (2) qui est enroulée sous la forme d'un rouleau est disposée sur un côté frontal d'un carter logeant l'imprimante à laser pour étiquettes sur bandes continues, que la bande porte-étiquettes (2) est enroulée à nouveau de l'autre côté au moyen d'un dispositif enrouleur (4) après qu 'elle a été imprimée, et que l'imprimante à laser comporte un poste de fixage (lampe flash 6) pour fixer le toner qui a été appliqué sur les étiquettes par l'intermédiaire d'un tambour (13) de transfert des images, caractérisée par le fait que le poste de fixage du toner est une lampe flash (6) qui n'est pas en contact avec la bande porte-étiquettes (2), qui émet une impulsion dont la fréquence est comprise entre 1 et 5 Hz dans la gamme de la lumière visible et de la lumière infrarouge comprise entre 700 nm et 1.100 nm avec une énergie électrique allant jusqu'à 1.500 Watts par impulsion environ, ceci correspondant à une densité d'énergie réglable comprise entre 3 W/cm² et 20 W/cm², et qui est alimentée par l'intermédiaire d'un chargeur de batterie à haute fréquence (L) dont le condensateur engendrant les éclairs atteint une tension de 650 V environ pour les éclairs, par le fait qu'est disposé au-dessus de la lampe flash (6) un réflecteur (17) de forme à peu près parabolique dont l'ouverture destinée au rayonnement, mesurée dans la direction longitudinale de la bande, est de 30 mm environ, par le fait qu'il est prévu un dispositif de refroidissement (11) qui refroidit la lampe flash (6) au moyen de 20 l/s environ d'air de refroidissement, et qu'il est prévu un dispositif d'aspiration qui est destiné à aspirer les vapeurs de toner et qui refoule à travers des filtres (12), par le fait qu'un dispositif de découpage longitudinal (10) est disposé entre le poste de fixage (lampe flash 6) et le dispositif enrouleur (4), et par le fait que le dispositif enrouleur (4) est constitué par une pluralité de rouleaux qui sont entraînés en commun et qui sont séparés les uns des autres par des disques.

2. Imprimante à laser pour étiquettes sur bandes continues selon la revendication 1, caractérisée par le fait que le verre de la lampe flash est réalisé sous la forme d'un filtre à ultraviolets.

3. Imprimante à laser pour étiquettes sur bandes continues selon la revendication 1, caractérisée par le fait que le condensateur engendrant les éclairs est divisé en une pluralité de condensateurs individuels branchés en parallèle.

4. Imprimante à laser pour étiquettes sur bandes continues selon la revendication 1, caractérisée par le fait qu'il est prévu une cellule photoélectrique (14) destinée à détecter le bord de l'étiquette qui est son bord antérieur dans la direction du défilement ou les bords des trous dans le cas de bandes porteuses pourvues de trous sur leurs bords.

5. Imprimante à laser pour étiquettes sur bandes continues selon la revendication 4, caractérisée par le fait que la cellule photoélectrique (14) est une cellule photoélectrique en forme de fourche qui est divisée en un émetteur (15) et un récepteur (16) et dont chaque élément est disposé sur les bras d'un volet basculant qui reçoivent entre eux la bande porte-étiquettes (2).

6. Imprimante à laser pour étiquettes sur bandes continues selon la revendication 4 ou 5, caractérisée par le fait que la distance entre la cellule photoélectrique (14) et la ligne selon laquelle le tambour (13) de transfert des images est en contact avec la bande porte-étiquettes (2) est égale à la distance (D) qui est comprise, sur le pourtour du tambour (13) de transfert des images, entre cette ligne de contact et l'entrée du rayon laser sur le tambour (13) de transfert des images.

7. Imprimante à laser pour étiquettes sur bandes continues selon la revendication 1, caractérisée par le fait qu'il est prévu un moteur d'entraînement commun pour le tambour (13) de transfert des images et pour le rouleau d'entraînement qui est assemblé dans un module de transport et qui comprend un rouleau de poussée (entraînement par friction 18) et le dispositif de découpage longitudinal (10).

8. Imprimante à laser pour étiquettes sur bandes continues selon la revendication 1 ou 7, caractérisée par le fait que le dispositif de découpage longitudinal (10) est constitué par des couteaux rotatifs qui sont montés sur un axe d'entraînement en pouvant être déplacés et fixés.

9. Imprimante à laser pour étiquettes sur bandes continues selon la revendication 1, caractérisée par le fait que les constituants individuels de l'appareil sont logés dans une partie supérieure (7) d'un carter ou dans une partie inférieure (9) de celui-ci, respectivement, la partie supérieure (7) pouvant être ouverte par basculement au moyen de charnières (8) autour d'un axe qui s'étend parallèlement ou perpendiculairement à la direction longitudinale de la bande porte-étiquettes et qui est situé dans le plan du guidage de la bande.

10. Imprimante à laser pour étiquettes sur bandes continues selon la revendication 1, caractérisée par le fait que l'axe du dispositif enrouleur (4) est relié au moteur d'entraînement par l'intermédiaire d'un couplage magnétique qui impartit une traction limitée constante.

11. Imprimante à laser pour étiquettes sur bandes continues selon la revendication 1, caractérisée par le fait que le chargeur de batterie à haute fréquence (L) présente une puissance absorbée qui correspond au réglage concerné et qui reste toujours constante.
